(19) **Europäisches Patentamt / European Patent Office / Office européen des brevets**

(11) **EP 3 332 221 B1**

(12) # EUROPEAN PATENT SPECIFICATION

(45) Date of publication and mention
of the grant of the patent:
**10.04.2019 Bulletin 2019/15**

(21) Application number: **16763949.1**

(22) Date of filing: **02.08.2016**

(51) Int Cl.:
***G01D 4/00*** *(2006.01)*

(86) International application number:
**PCT/IB2016/054631**

(87) International publication number:
**WO 2017/021872 (09.02.2017 Gazette 2017/06)**

(54) **METHOD AND DEVICE FOR ESTIMATING THE ELECTRICAL POWER CONSUMED BY A DOMESTIC ELECTRIC NETWORK**

VERFAHREN UND VORRICHTUNG ZUR KALKULATION DES STROMVERBRAUCHS DURCH EIN HAUSHALTSSTROMNETZ

PROCÉDÉ ET DISPOSITIF D'ESTIMATION DE L'ÉNERGIE ÉLECTRIQUE CONSOMMÉE PAR UN RÉSEAU ÉLECTRIQUE DOMESTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2015 IT UB20152847**

(43) Date of publication of application:
**13.06.2018 Bulletin 2018/24**

(73) Proprietor: **e-distribuzione S.p.A.**
**00198 Roma (IT)**

(72) Inventor: **MANDOLINI, Luigi**
**I-00198 Roma (IT)**

(74) Representative: **Carangelo, Pierluigi et al**
**Jacobacci & Partners S.p.A.**
**Via Tomacelli 146**
**00186 Roma (IT)**

(56) References cited:
**WO-A1-2009/013762     WO-A2-2004/095327**
**WO-A2-2011/050212     WO-A2-2011/058326**
**US-A1- 2012 243 416**

**Description**

This description relates to the technical field of electricity distribution networks and refers in particular to a method and a device for estimating the electrical power consumption of a domestic electric network.

An interface device is known that is connectable to a domestic electric network and able to communicate with the electronic energy meter of the domestic electric network by powerline communication to acquire power consumption data and display power consumption values for example on a display of the device itself or an external device such as a personal computer or smartphone.

The purpose of the above described type of interface device is to provide a user with data of the power consumed by the domestic electric network, the knowledge of which is particularly useful for user so that he can activate a large loads, such as a washing machine or iron, in such a way as to avoid the automatic disconnection of his domestic electric network from the distribution grid by the electronic energy meter when the power consumed exceeds a certain threshold value. A device of the type described above can also improve the user's awareness of his consumption, leading to energy savings.

The known type of interface device, existing both in a version with plug for connection to a common outlet and in a version mountable on a DIN rail in an electrical panel, comprises a communication module to communicate with the electronic meter using powerline communication and a control module to control the communication module so as to poll the electronic energy meter at a predetermined fixed frequency to acquire the power values from the meter.

The interface device comprises a USB port for connection to a personal computer, on which a program is installed that processes the acquired values to calculate power consumption values and that displays the power consumption values.

The frequency of polling of the electronic energy meter by the interface device cannot be too high because the powerline communication band of a home network is typically limited. Consequently, the power consumption data provided through the interface device may not be updated with sufficient speed. In other words, in case of sudden actuation of large loads, the interface device would not be able to inform the user in time to prevent the disconnection of the domestic network. The same problem could occur if the electronic energy meter and the interface device communicate with each other on a communication channel other than powerline communication, for example, if such a channel were shared channel and/or with the band limitation requirements. Moreover, in other cases also, whether or not independently of the need to reduce the use of a shared communications channel, there may be the need to contain or, in general, optimise the number of questions of the electronic energy meter, for example to optimise the computing/communication resources of the electronic energy meter.

Document WO2004/095327 describes a method for obtaining consumption profiles from a remote processing centre. These profiles are obtained through the consumption data provided solely by electric energy meters that are regularly polled.

The purpose of this invention is to provide a method for estimating, in real time, the electrical power consumed by the domestic electric network that overcomes, or at least reduces, the drawbacks described above with reference to the prior art interface device.

This invention provides a method and a device for estimating the electric power consumption of a domestic electric network according to the accompanying claims.

According to its more general embodiment, the method for estimating the electrical power consumed by a domestic electric network comprising an electronic energy meter connected to an electrical power distribution grid, comprises the steps of:

- periodically polling, according to a fixed or variable polling period Tq, the electronic energy meter on a communication channel by means of a device comprising electrical connection elements connected to the domestic electric network, in order to receive, at every polling instant, information comprising at least one parameter related to a power consumption value, such as, for example, the measurement of active power or voltage and current, carried out by the electronic energy meter;
- calculating or obtaining on-board the device first voltage values and corresponding first current values.

The method also comprises the steps of:

- sampling, by means of a voltage value circuit provided on-board at said device and connected to said electrical connection elements, the voltage of the domestic electric network according to a sampling period Ts lower than said polling period Tq to obtain second voltage values; and
- determining on-board the device a plurality of estimated values of power consumed, between two consecutive polling instants of the electronic energy meter, as a function of said first voltage values, of said first current values and of said second voltage values.

According to its more general embodiment, the device is operatively connectable to an electronic energy meter to estimate the electric power consumed by a domestic electric network comprising said electronic energy meter. The device comprises electrical connection elements for the connection of the device to the domestic electric network, a communication interface for communication with the electronic energy meter on a communication channel and a processing and control unit operatively connected to the communication interface. The device is configured and programmed to poll the electronic energy meter on said communication channel in order to receive at each polling instant Tq information comprising at least one parameter related to a power consumption measurement performed by the electronic energy meter.

The device comprises a voltage measurement circuit for measuring the voltage of the domestic electric network at the connection point with said electrical connection elements and outputting a plurality of voltage values between two subsequent pollings of the electronic energy meter. The processing and control unit is configured for calculating a plurality of estimated values of power consumed between two subsequent pollings by means of a function that depends on said voltage values provided by the voltage measurement circuit and by said at least one received parameter related to a power consumption measurement carried out by the electronic energy meter.

The method and the device described above on a general level will be described below in greater detail with reference to the accompanying drawings, which illustrate a non-limiting implementation example, in which:

- Figure 1 schematically illustrates an electric network and an example of a device connected to said domestic electric network to estimate the electric power consumed by said domestic electric network;
- Figure 2 illustrates an example of division into power bands that is adopted in a possible embodiment of the method of this invention to estimate the electric power consumption of the domestic electric network; and
- Figure 3 illustrates an example of division into power bands and sub-bands that is adopted in a possible embodiment of the method of this invention.

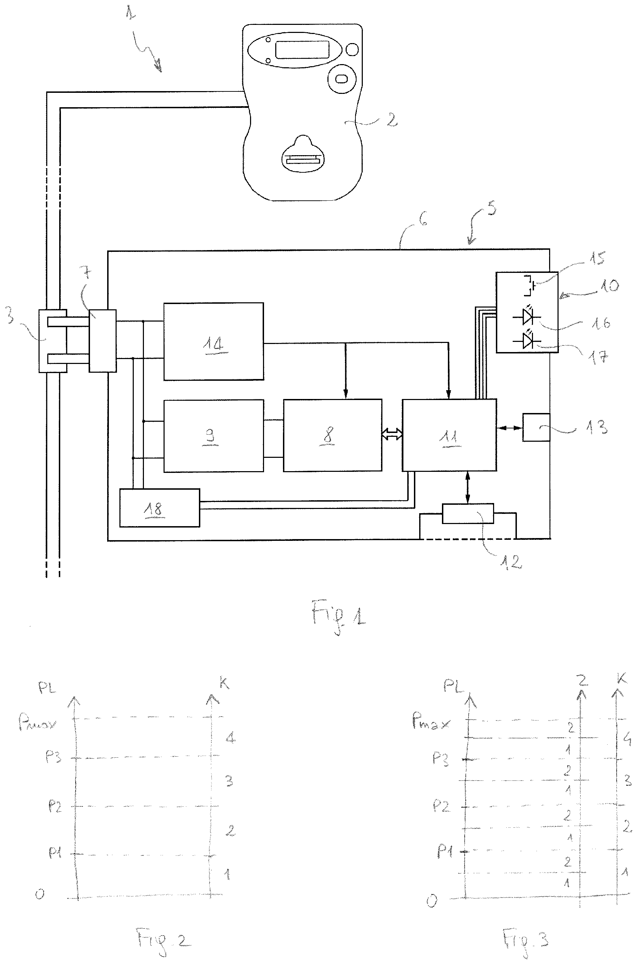

In Figure 1, reference number 1 indicates a domestic electric network, which comprises an electronic energy meter 2 connected to the electrical distribution grid and at least one power outlet 3, for example bipolar or tripolar. To the electric network and in particular to the power outlet 3 is connected, i.e., electrically interconnected, by means of electrical connection elements, a device 5 for estimating the power consumption of the electric network 1. It is clear that the electric network 1 also comprises one or more loads not shown in the figures, for example based on the appliances connected to the electric network 1 and activated/deactivated by the user.

The device 5 comprises a box-like container 6, in the example comprising a power plug 7 suitable to be coupled to the power outlet 3. According to a preferred and not limiting embodiment, the device 5 preferably comprises, housed in the box-like container 6: a communication interface 8 for powerline communication with the electronic energy meter 2, a coupling circuit 9 for connecting the communication interface 8 to the power plug 7, a user interface 10, a processing and control unit 11 provided with an internal memory and interfaced with the communication interface 8 and with the user interface 10, two USB sockets 12 and 13 connected to the processing and control unit 11 and a power supply module 14 with its own input directly connected to the power plug 7 to electrically power the communication interface 8 and the processing and control unit 11.

In an alternative embodiment, the communication interface 8 could be a radio communication interface, for example a Bluetooth or Wi-Fi communication interface. In the rest of this description, for the sake of simplicity of description and without thereby introducing any limitation, reference will be made to the case in which the communication interface 8 is a powerline communication interface and that therefore the communication between the device 5 and electronic energy meter is a powerline communication on the domestic electric network.

The user interface 10 preferably comprises a button 15, and two LEDs 16 and 17 controlled by the processing and control unit 11 to signal the operating status of the device 5, for example to signal that pairing has occurred between the device 5 and the electronic energy meter 2.

The USB socket 12 is for example provided to receive a USB type A connector and is used to connect the device 5 to an additional device, for example a wireless network interface device, for example Wi-Fi or Bluetooth. The USB socket 13 is for example provided to a USB mini-B type connector and is used for connection of the device 5 to a personal computer.

The device 5 comprises a voltage measurement circuit 18, which has:

- an input connected to the electric network 1, for example through the power plug 7 (i.e., through the electric connection elements of the device 5), for measuring the electrical voltage of the domestic electric network 1 in point of the network (for example at the power outlet 3) to which the device 5 is connected;
- an output connected to the processing and control unit 11 to provide the measured voltage values to it.

The voltage measurement circuit 18 can be made in a manner in itself substantially known. According to a first embodiment, the voltage measurement circuit 18 includes a shunt resistor, which is connected in a known manner to the input of an analogue/digital converter of the processing and control unit 11. According to a second embodiment, the voltage measurement circuit 18 comprises an integrated circuit of known type based on a transistor element.

According to the invention, the processing and control unit 11 is programmed and configured to implement the following method for estimating the electric power consumption of the domestic electric network 1.

The device 5 periodically polls (with fixed or variable frequency) the electronic energy meter 2 to receive at each polling instant information useful to obtain or calculate first voltage values and first current values. This information comprises at least one parameter related to a power consumption measurement performed by the electronic energy meter 2. According to an embodiment, said at least one parameter comprises a power value, for example, active power, measured by the electronic energy meter 2. In this case the device 5 is such as to calculate or determine for each polling a respective first voltage value and a respective first current value starting from said measured power value, i.e., starting from said at least one parameter. According to an alternative embodiment, said at least one parameter comprises a current value and a voltage value measured by the electronic energy meter 2, thus in this case the device 5 obtains the first current values and the first voltage values directly from electronic energy meter 2.

The polling period Tq with which the device 5 polls the electronic energy meter 2 has a value comprised between 1 minute and 60 minutes in such a way that the band (limited) of the powerline communication transmission channel does not hinder the communication between the device 5 and electronic energy meter 2.

The sampling through the voltage measurement circuit 18, takes place according to a fixed or variable sampling period Ts less than the polling period Tq and allows the device 5 to obtain second voltage values. Advantageously, to simplify the implementation of the method, the voltage at the power plug 7 is sampled synchronously with the polling of the electronic energy meter 2 and with a sampling period Ts of a value equal to an integer submultiple of the polling period value Tq.

Preferably, in the sampling step, the network voltage is sampled as analogue input voltage to produce said second voltage values as digital values.

Note that said second voltage values are obtained from the device 5 in an autonomous way with respect to the electronic energy meter 2, i.e., without interrogating the electronic energy meter 2.

According to an embodiment, at the i-th polling instant the power value $Pce_i$ measured by the electronic energy meter 2 value is read, for example an active power value, or a first voltage value and a first current value.

Assuming that the difference between the detected voltage across the electronic energy meter 2 $Vce_i$, and that read by the voltage measurement circuit 18 $Vdev_i$ is negligible, then:

$$Vce_i = Vdev_i$$

Therefore it is assumed:

$$Ice_i = Pce_i/Vce_i$$

We define

$$\Delta Ice_i = Ice_i - Ice_{i-1}$$

where i and i-1 indicate two consecutive polling instants of the electronic energy meter 2.

According to an embodiment, in an initial step of the estimation method, as soon as the value of $\Delta Ice_i$, which represents a current variation between two successive pollings of the electronic energy meter 2, exceeds a certain threshold value It0, the first current values $Ice_i$ and the first voltage values $Vce_i$ are used by the device 5 to obtain a resistance, indicated below by Req, which is indicative of the equivalent resistance seen by the electronic energy meter 2 towards the electrical power distribution grid. The threshold value It0 is, for example, between 2A-8A, extremes included.

More in detail, at each polling instant (i-th polling instant) in which the value $\Delta Ice$ exceeds the threshold value It0, the processing and control unit calculates an instantaneous resistance $Req_i$ as the ratio between the absolute value of a variation between the last two voltage values and a variation between the last two current values provided directly or indirectly by the electronic energy meter 2, i.e.,

$$Req_i = |\Delta Vce_i|/|\Delta Ice_i|$$

where

$$\Delta Vce_i = Vce_i - Vce_{i-1}$$

$$\Delta Ice_i = Ice_i - Ice_{i-1}.$$

Preferably, the equivalent resistance Req is calculated as the sliding window arithmetic average of the instantaneous resistances $Req_i$ as these are progressively calculated. The sliding window used for the calculation of the arithmetic average has an amplitude comprised, for example, between 100 and 400 samples.

The voltage and current values are directly provided by the electronic energy meter 2 in the case in which the meter 2 is such as to measure said values and provide them in output following the pollings performed by the device 5. In this case, the device 5 obtains on-board the first current values and first voltage values directly from the electronic energy meter 2.

The voltage and current values are indirectly provided by the electronic energy meter 2 in the case in which the meter 2 is not such as to measure said values and/or provide them in output following the pollings performed by the device 5 and in the case in which it is the device 5 that calculates such values starting from information provided by the electronic energy meter 2. In this case, the device 5 is such as to calculate on-board for each polling a respective first voltage value and a respective first current value starting from at least one parameter related to a power consumption measurement made by the electronic energy meter 2. As already explained, according to an embodiment, said at least one parameter comprises a power value, for example, active power, measured by the electronic energy meter 2.

The intermediate data for the calculation of the sliding window arithmetic average are preferably stored in the memory of the processing and control unit 11.

For each sampling instant of the network voltage by the voltage measurement circuit 18 (j-th sampling instant), the voltage variation $\Delta Vdev_{ji}$ is calculated as the difference between the voltage value read at that sampling instant (j-th polling instant) and the voltage value read at time of the last polling of the electronic energy meter 2 (i-th polling instant), and a current variation $\Delta Idev_{ji}$ as the ratio between said voltage variation $\Delta Vdev_{ji}$ and the equivalent resistance Req, i.e.:

$$\Delta Vdev_{ji} = Vdev_j - Vdev_i$$

$$\Delta Idev_{ji} = - \Delta Vdev_{ji}/Req,$$

where the j-th sampling instant is comprised between the i-th polling instant and the i+1-th polling instant.

An estimated value of power consumed or absorbed by the domestic electric network 1 between two consecutive pollings, i.e., at the j-th sampling instant between the i-th polling instant and the i+1-th polling instant, is obtained with the following formula:

$$PL_{ji} = (Vce_i + \Delta Vdev_{ji}) \cdot (Ice_i + \Delta Idev_{ji}),$$

where $Vce_i$ and $Ice_i$ are first voltage and current values, i.e., the values obtained or calculated by the device 5 thanks to the polling of the electronic energy meter 2 at the i-th instant. In reality, the voltage variations $\Delta Vdev_{ji}$ also comprise random components that are not due to the connection or disconnection of a load in the domestic electric network and are, for example, due to the switching on or off of a load upstream of the electronic energy counter 2. These random components introduce some error in the calculation of the estimated power consumption value $PL_{ji}$, this error, however, being cancelled at each sampling carried out at the polling instants of the electrical energy meter 2. In fact, at the polling instants, the voltage variations $\Delta Vdev_{ji}$, and consequently the current variations $\Delta Idev_{ji}$, are null by definition.

According to an advantageous embodiment, to reduce the noise contribution between two successive pollings of the electronic energy meter 2, a moving average $<PL_{ji}>$ is performed on a given average time interval Tav of the estimated power consumption values $PL_{ji}$, for example, Tav is comprised in the range of 10-30 seconds, extremes included.

For example, the estimated power consumption values $PL_{ji}$ or the averages $<PL_{ji}>$, calculated at each sampling step according to the period Ts are made available to the USB sockets 12 and 13 so that they can be acquired and processed by an appropriate program installed on a personal computer in order to display the power consumption data and/or generate audio and/or visual alarms in relation to such data. Henceforth, for simplicity of description, reference will be made to the estimated power consumption values $PL_{ji}$ both in the case in which these values are not average and when these values are averaged to reduce noise, as described above.

According to a further embodiment of this invention, the polling period Tq of the electronic energy meter 2 is regulated by the device 5 as a function of the estimated power consumption values $PL_{ji}$ so as to increase the accuracy of the estimate of the power consumed in the most critical situations. In particular, the polling frequency is progressively increased with as the estimated power consumption values $PL_{ji}$ increase, since the closer the power is to the threshold value that causes automatic disconnection, the more critical the situation becomes and, thus, the power is estimated with greater precision.

More in detail, in the above embodiment, the power range that can be supplied by electronic energy meter 2 is divided into several power bands by means of a certain number N of power threshold values, each of which is associated with a respective hysteresis interval. Therefore, the number of power bands is equal to N+1. The k-th power band in which said estimated power consumption values $PL_{ji}$ are found is identified by the device 5 on the basis of a comparison between the estimated power consumption $PL_{ji}$ and the N threshold values. Preferably, this comparison is performed by the device 5 at each sampling step to allow a quick adjustment of the polling period Tq.

Figure 2 illustrates an example with 3 threshold values (N=3), indicated with P1, P2 and P3, which divide the power range into four power bands.

According to a possible embodiment, to each power band is associated an initial polling time $tq0_k$ (or "first polling time"), where k is the band index comprised between 1 and N+1, which consists of the time that must elapse from when the estimated power consumption value $PL_{ji}$ enters the k-th band as a result of an increase in power (transition from the k-1-th band to the k-th band) before performing the first polling of the electronic energy meter 2 in the k-th band. Preferably, the above logic is not applied in the case of a decrease of the estimated power consumption towards a lower band, since the decrease in the estimated power consumption is considered a moving away from the critical situation. According to an advantageous embodiment, the value of the first polling times $tq0_k$ decreases passing from the lowest power band (k=1) to the highest power band (k=N+1):

$$Tq0_{k+1} < Tq0_k.$$

Moreover, to each power band is associated a respective value $Tq_k$ of the polling period in such a way that when the estimated power consumption value $PL_{ji}$ enters the k-th power band, the polling period Tq is adjusted to the related value $Tq_k$, i.e., $Tq=Tq_k$. The values $Tq_k$ assigned to the polling period Tq upon entering a power band decrease, passing from the lowest power band (k=1) to the highest power band (k=N+1):

$$Tq_{k+1} < Tq_k.$$

The values $Tq_k$ are for example comprised between a minimum value of 10 minutes for the highest power band up to a maximum of 60 minutes for the lowest power band.

As long as the estimated power consumption values $PL_{ji}$ remain in the k-th band, the electronic energy counter 2 is polled according to the respective polling period $Tq=Tq_k$.

According to a further embodiment of this invention, each of the N power bands below the highest threshold value (N-th) is divided into two related sub-bands of equal amplitude by a related further threshold value. Therefore, the number of power sub-bands is equal to 2N.

Figure 3 illustrates the sub-bands in the same example of bands (N = 3) of Figure 2.

To each of the sub-bands is associated a respective value $Tq_{kz}$ of the polling period, where k is the band index comprised between 1 and N and, within the k-th band, z is the sub-band index, which is 1 or 2. The values $Tq_{kz}$ for k comprised between 1 and N of the embodiment of Figure 3 replace the values $Tq_k$ of the same index k of the embodiment of Figure 2. The values $Tq_{kz}$ of the polling period decrease passing from the lower sub-band of the first band (k=1) to the upper sub-band of the penultimate band (z=N). The value $Tq_{N+1}$ associated to the last band is smaller than the values of $Tq_{kz}$ of all the sub-bands (k comprised between 1 and N).

The values $Tq_{kz}$ are for example comprised between a minimum value of 10 minutes for the highest power band up to a maximum of 60 minutes for the lowest power band.

The presence of the sub-bands allows optimising the polling frequency in order to increase it only in the most critical power situations that could lead to a disconnection of the electronic energy meter 2. To two sub-bands belonging to the same band k, is preferably associated the same first polling time $T_{0k}$.

There are further possible embodiments, complementary to those already described, that allow further optimising the polling of the electronic meter, which will be described below.

According to a first further embodiment, the polling of the electronic energy meter 2, occurs in correspondence of a power variation greater than a determined fixed value. More in detail, for example, the average value of the average values $<PL_{ji}>$ is calculated using a number of Lv of previous average values $<PL_{ji}>$. This average value is indicated with $<<PL_{ji}>>$ and stored for later processing. Then, the difference $\Delta<PL_{ji}>$ between $<PL_{ji}>$ And $<<PL_{ji}>>$ is calculated.

$$\Delta<PL_{ji}> = <PL_{ji}> - <<PL_{ji}>>.$$

Two counting variables, m and d are defined and initially set to 0

$$m, d = 0.$$

If the difference $\Delta<PL_{ji}>$ is greater than the pre-set power value PV (e.g., 1000 W) or less than the pre-set power value PN (e.g., -500 W), the counting variables m and d are set to one and zero, respectively.
If $\Delta<PL_{ji}> > PV$ or $\Delta<PL_{ji}> < PN$ then
m = 1; d = 0

At each sampling instant q > j, the difference $\Delta<PL_{ji}>$ between $<PL_{ji}>$ And $<<PL_{ji}>>$ is calculated.

$$\Delta<PL_{qi}> = <PL_{qi}> - <<PL_{ji}>>.$$

If $\Delta<PL_{ji}>$ is greater than the pre-set power value PV or less than the pre-set power value PN, the variable d is set to zero. If neither of these conditions has occurred, d is increased by one. Therefore:
If $\Delta<PL_{qi}> > PV$ or $\Delta<PL_{qi}> < PN$ then
d = 0
else d = d+1

If the value of d exceeds a pre-set value DMAX, m is set to zero, i.e., it is reset. Otherwise, m is increased by one.
If d > DMAX Then
m = 0
else m = m+1

If m assumes the pre-set value MMAX, m is set to zero, d is set to zero, and at the next processing instant the electronic energy meter 2 is polled. Therefore:
If m = MMAX then
m = 0; d = 0
polling meter at instant j+1.

According to a second further embodiment, complementary to the first further form of embodiment described above, the polling of the electronic energy meter 2, takes place in correspondence to the detection of a difference between the local maximum $<PL>_{max}$ and the local minimum $<PL>_{min}$ of the power curve $<PL_{ji}>$ greater than a pre-set amount. More in detail, the average power value $<PL_{ji}>$ and the value $<PL_{j-1, i}>$ related to the preceding sampling instant are compared.

If $<PL_{ji}>$ is greater than $<PL_{j-1,i}>$, the trend is increasing, otherwise it is decreasing.

If the trend detected at instant j differs from that detected at instant j-1, the difference $\Delta PL$ is calculated

$$\Delta PL = <PL>_{max} - <PL>_{min}.$$

If this difference is greater than a pre-set value LTMAX, at the next processing instant the electronic energy meter 2 is polled. If the trend detected is increasing, the value $<PL_{ji}>$ is stored in the variable $<PL>_{max}$. If the trend detected is decreasing, the value $<PL_{ji}>$ is stored in the variable $<PL>_{min}$.

According to a third further embodiment of this invention, combinable with the first further form of embodiment described above and/or with the second further form of embodiment described above, to each power band is associated a minimum polling time $TM0_k$, where k is the band index comprised between 1 and N+1. This minimum polling time indicates the minimum time interval that must elapse between two successive pollings of the electronic energy meter 2.

The value of the minimum polling times $tq0_k$ decreases passing from the lowest power band (k=1) to the highest power band (k=N+1):

$$Tm0_{k+1} < Tm0_k.$$

Although the invention described above makes particular reference to very specific embodiments, it should not be considered limited to these examples, since its scope includes all those variations, modifications or simplifications that would be evident to an expert in the field, such as for example implementation in a device mountable on a DIN rail and connectible at a point of the electric network immediately downstream of the electronic energy meter 2 by means of appropriate connection terminals.

**Claims**

1.  Method for estimating the electrical power consumed by a domestic electric network comprising an electronic energy meter (2) connected to an electrical power distribution grid, the method comprising the steps of:

    - periodically polling, according to a fixed or variable polling period Tq, the electronic energy meter (2) on a communication channel by means of a device (5) comprising electrical connection elements (7) connected to the domestic electric network (1), in order to receive, at every polling instant, information comprising at least one parameter related to a power consumption measurement carried out by the electronic energy meter (2);
    - calculating or obtaining on-board the device (5) first voltage values ($Vce_i$) and corresponding first current values ($Ice_i$) ;

    the method **characterised in that** it comprises the steps of:

    - sampling, by means of a voltage measurement circuit (18) provided on-board said device (5) and connected to said electrical connection elements (7), the voltage of the domestic electric network (1) according to a sampling period Ts less than said polling period to obtain second voltage values ($Vdev_j$, $Vdev_i$) ; and
    - determining on-board the device (5) a plurality of estimated values of power consumed ($PL_{ji}$), between two consecutive polling instants of the electronic meter (2), as a function of said first voltage values ($Vce_i$), of said first current values ($Ice_i$) and of said second voltage values ($Vdev_j$).

2.  Method according to claim 1, wherein the determining step comprises the steps of:

    - calculating an equivalent resistance (Req), which is indicative of the equivalent resistance seen by the electronic meter (2) towards the electricity distribution grid, as a function of a series of said first voltage values ($Vce_i$) and a corresponding series of said first current values ($Ice_i$); and
    - determining estimated values of power consumed ($PL_{ji}$) as a function of said first voltage values ($Vce_i$), of said first current values ($Ice_i$), of said equivalent resistance (Req) and of said second voltage values ($Vdev_j$, $Vdev_i$).

3.  Method according to claim 2, wherein said equivalent resistance (Req) is calculated as the sliding window arithmetic average of an instantaneous resistances ($Req_i$), each of which is calculated as the ratio between a first voltage variation ($\Delta Vcei$) and a corresponding first current variation ($\Delta Ice_i$), said first voltage variation ($\Delta Vcei$) being a difference between two first voltage values acquired/calculated in two consecutive polling steps and said first current variation ($\Delta Ice_i$) being a difference between two current values obtained/calculated in the same two polling steps.

4.  Method according to claims 2 or 3, wherein the determining step comprises the steps of:

    - determining estimated values of power consumed ($PL_{ji}$) between two consecutive polling steps (i, i+1) as a function of one of said first voltage values ($Vce_i$) and one of said first current values ($Ice_i$) acquired at the first of said two consecutive polling steps and as a function of the second voltage values ($Vdev_j$) sampled between the two consecutive polling steps.

5.  Method according to claims 2 or 3, wherein the determining step comprises the steps of:

- for each sampling step (j) between two consecutive polling steps (i, i+1), calculating a related second voltage variation ($\Delta$Vdev$_{ji}$) between one of said second voltage values (Vdev$_j$), relating to this sampling step, and another of said second voltage values (Vdev$_i$), sampled at the first of the two consecutive polling steps; and

- for each sampling step (j) between two consecutive polling steps (i, i+1), calculating a related estimated value of power consumed (PLji) as a function of one of said first voltage values (Vcei) and of one of said first current values (Icei) obtained or calculated at the first of said two consecutive polling steps and as a function of said second voltage values ($\Delta$Vdev$_{ji}$) of said equivalent resistance (Req).

6. Method according to claim 5, wherein said estimated value of power consumed is calculated according to the formula:

$$PL_{ji} = (Vce_i + \Delta Vdev_{ji}) \cdot (Ice_i + \Delta Idev_{ji}),$$

where PL$_{ji}$ is the estimated value of power consumed at the generic sampling step j, Vce$_i$ is said one of said first voltage values obtained/calculated at the first of said two consecutive polling steps, $\Delta$Vdev$_{ji}$ is said second voltage variation, Ice$_i$ is said one of said first current values obtained/calculated at the first of said two consecutive polling steps and $\Delta$Idev$_{ji}$ is a second current variation calculated as the ratio between said second voltage variation and said equivalent resistance.

7. Method according to any one of claims 1 to 6, comprising a step of varying the polling period as a function of said estimation values of power consumed (PL$_{ji}$).

8. Method according to claim 7, wherein said varying step comprises an operation of progressively reducing said polling period as a function of said estimated values of power consumed (PL$_{ji}$).

9. Method according to any one of claims 1 to 8, comprising the steps of:

- subdividing the range of power deliverable by the electronic energy meter (2) into a plurality of power bands by means of a corresponding plurality of power threshold values;
- associating to the power bands respective polling period values, which decrease passing from the lowest power band to the highest power band;
- identifying the power band in which said estimated values of power consumed (PL$_{ji}$) are found on the basis of a comparison between said estimated values of power consumed and said power threshold values; and
- adjusting the polling period to the polling period value associated with the power band identified.

10. Method according to any one of claims 1 to 9, and comprising:

- subdividing the range of power deliverable by said electronic energy meter (2) into a plurality of power bands by means of a corresponding plurality of power threshold values;
- identifying the power band in which said estimated values of power consumed (PL$_{ji}$) are found on the basis of a comparison between said estimated values of power consumed and said power threshold values; and
- associating to the respective power bands initial polling times (tq0$_k$), each of which consists of the time that must elapse from when the estimated values of power consumed are entered in the related power band following an increase of power before performing a first polling of said electronic meter (2) in such power band.

11. Method according to any one of the preceding claims, wherein said communication channel is said domestic electric network and wherein said electronic energy meter (2) and said device communicate with each other over between them on said electric network by means of powerline communication.

12. Method according to any one of the preceding claims, wherein said sampling step is performed by sampling said network voltage as analogue input voltage to produce said second voltage values as digital values.

13. Method according to any one of the preceding claims, wherein said second voltage values are obtained by the device (5) in an autonomous way with respect to the electronic energy meter (2).

14. Device (5) operatively connectable to an electronic energy meter to estimate the electrical power consumed by a domestic electric network comprising said electronic energy meter (2), the device (5) comprising electrical connection elements (7) for connecting the device to the domestic electric network (1), a communication interface (8) for communication with the electronic energy meter (2) on a communication channel and a processing and control unit (11) operatively connected to the communication interface (8), the device (5) being configured and programmed to poll the electronic energy meter (2) on said communication channel in order to receive at each polling instant information comprising at least one parameter related to a power consumption measurement carried out by the electronic energy meter (2) and being **characterised in that**:

- the device (5) comprises a voltage measurement circuit (18) for measuring the voltage of the domestic electric network (1) at the connection point with said electrical connection elements (7) and outputting a plurality of voltage values between two subsequent pollings of the electronic energy meter (2);
- the processing and control unit (11) is configured for calculating a plurality of estimated values of power consumed between two subsequent pollings by means of a function that depends on said voltage values provided by the voltage measurement circuit (8) and by said at least one received parameter related to a power consumption measurement carried out by the electronic energy meter (2).

15. Device according to claim 14, said device is such as to sample the network voltage as analogue input voltage to produce said second voltage values as digital values.

16. Device according to any of the preceding claims, wherein said second voltage values are obtained by the device (5) in an autonomous way with respect to the electronic energy meter (2).

17. Device according to claim 14, wherein said communication interface (8) is a powerline communication interface.

18. Device according to any of claims 14 to 17, wherein the processing and control unit (11) is configured to implement a method according to any of claims 1 to 13.

**Patentansprüche**

1. Verfahren zum Schätzen der elektrischen Leistung, die durch ein Haushaltsstromnetz verbraucht wird, das einen mit einem Elektrische-Leistung-Verteilungsnetz verbundenen elektronischen Energiezähler (2) aufweist, wobei das Verfahren folgende Schritte aufweist:

- periodisches Abfragen, gemäß einer festen oder variablen Abfrageperiode Tq, des elektronischen Energiezählers (2) über einen Kommunikationskanal mittels einer Vorrichtung (5), die mit dem Haushaltsstromnetz (1) verbundene elektrische Verbindungselemente (7) aufweist, um zu jedem Abfragezeitpunkt Informationen zu empfangen, die zumindest einen Parameter aufweisen, der sich auf eine durch den elektronischen Energiezähler (2) durchgeführte Leistungsverbrauchsmessung bezieht;
- Berechnen oder Erhalten, bordseitig der Vorrichtung (5), von ersten Spannungswerten (Vcei) und entsprechenden ersten Stromwerten (Icei):

wobei das Verfahren **dadurch gekennzeichnet ist, dass** dasselbe folgende Schritte aufweist:

- Abtasten, mittels einer Spannungsmessschaltung (18), die bordseitig der Vorrichtung (5) vorgesehen und mit den elektrischen Verbindungselementen (7) verbunden ist, der Spannung des Haushaltsstromnetzes (1) gemäß einer Abtastperiode Ts, die kleiner als die Abfrageperiode ist, um zweite Spannungswerte ($Vdev_j$, $Vdev_i$) zu erhalten; und
- Bestimmen, bordseitig der Vorrichtung (5), einer Mehrzahl von geschätzten Werten der verbrauchten Leistung ($PL_{ji}$) zwischen zwei aufeinanderfolgenden Abfragezeitpunkten des elektronischen Zählers (2) in Abhängigkeit von den ersten Spannungswerten ($Vce_i$), den ersten Stromwerten ($Ice_i$) und den zweiten Spannungswerten ($Vdev_j$).

2. Verfahren gemäß Anspruch 1, bei dem der Bestimmungsschritt folgende Schritte aufweist:

- Berechnen eines Ersatzwiderstands (Req), der den durch den elektronischen Zähler (2) festgestellten Ersatzwiderstand gegenüber dem Elektrizitätsverteilungsnetz anzeigt, in Abhängigkeit von einer Reihe der ersten Spannungswerte ($Vce_i$) und einer entsprechenden Reihe der ersten Stromwerte ($Ice_i$) und
- Bestimmen von geschätzten Werten der verbrauchten Leistung ($PL_{ji}$) in Abhängigkeit von den ersten Span-

nungswerten (Vce$_i$), den ersten Stromwerten (Ice$_i$), dem Ersatzwiderstand (Req) und den zweiten Spannungswerten (Vdev$_j$, Vdev$_i$).

3. Verfahren gemäß Anspruch 2, wobei der Ersatzwiderstand (Req) als das Gleitfenster-arithmetisches-Mittel von momentanen Widerständen (Req$_i$) berechnet wird, von denen jeder als das Verhältnis zwischen einer ersten Spannungsschwankung ($\Delta$Vcei) und einer entsprechenden ersten Stromschwankung ($\Delta$Icei) berechnet wird, wobei die erste Spannungsschwankung ($\Delta$Vcei) eine Differenz zwischen zwei ersten Spannungswerten ist, die in zwei aufeinanderfolgenden Abfrageschritten erfasst/berechnet werden, und die erste Stromschwankung ($\Delta$Icei) eine Differenz zwischen zwei Stromwerten ist, die in denselben zwei Abfrageschritten erhalten/berechnet werden.

4. Verfahren gemäß Anspruch 2 oder 3, bei dem der Bestimmungsschritt folgenden Schritt aufweist:

   - Bestimmen von geschätzten Werten der verbrauchten Leistung (PL$_{ji}$) zwischen zwei aufeinanderfolgenden Abfrageschritten (i, i+1) in Abhängigkeit von einem der ersten Spannungswerte (Vce$_i$) und einem der ersten Stromwerte (Ice$_i$), die in dem ersten der zwei aufeinanderfolgenden Abfrageschritte erfasst werden, und in Abhängigkeit von den zweiten Spannungswerten (Vdev$_j$), die zwischen den zwei aufeinanderfolgenden Abfrageschritten abgetastet werden.

5. Verfahren gemäß Anspruch 2 oder 3, bei dem der Bestimmungsschritt folgende Schritte aufweist:

   - für jeden Abtastschritt (j) zwischen zwei aufeinanderfolgenden Abfrageschritten (i, i+1), Berechnen einer zugehörigen zweiten Spannungsschwankung ($\Delta$vdev$_{ji}$) zwischen einem der zweiten Spannungswerte (Vdev$_j$), die sich auf diesen Abtastschritt beziehen, und einem anderen der zweiten Spannungswerte (Vdev$_i$), die bei dem ersten der zwei aufeinanderfolgenden Abfrageschritte abgetastet werden; und
   - für jeden Abtastschritt (j) zwischen zwei aufeinanderfolgenden Abfrageschritten (i, i+1), Berechnen eines zugehörigen geschätzten Werts der verbrauchten Leistung (PLji) in Abhängigkeit von einem der ersten Spannungswerte (Vcei) und einem der ersten Stromwerte (Icei), die bei dem ersten der zwei aufeinanderfolgenden Abfrageschritte erhalten oder berechnet werden, und in Abhängigkeit von den zweiten Spannungswerten ($\Delta$Vdev$_{ji}$) des Ersatzwiderstands (Req).

6. Verfahren gemäß Anspruch 5, bei dem der geschätzte Wert der verbrauchten Leistung gemäß folgender Formel berechnet wird:

$$PL_{ji} = (Vce_i + \Delta Vdev_{ji}) \cdot (Ice_i + \Delta Idev_{ji}) \, ,$$

wobei PL$_{ji}$ der geschätzte Wert der verbrauchten Leistung bei dem allgemeinen Abtastschritt j ist, Vce$_i$ der eine der ersten Spannungswerte ist, die bei dem ersten der zwei aufeinanderfolgenden Abfrageschritte erhalten/berechnet werden, $\Delta$Vdev$_{ji}$ die zweite Spannungsschwankung ist, Ice$_i$ der eine der ersten Stromwerte ist, die bei dem ersten der zwei aufeinanderfolgenden Abfrageschritte erhalten/berechnet werden, und $\Delta$Idev$_{ji}$ eine zweite Stromschwankung ist, die als das Verhältnis zwischen der zweiten Spannungsschwankung und dem Ersatzwiderstand berechnet wird.

7. Verfahren gemäß einem der Ansprüche 1 bis 6, das einen Schritt des Variierens der Abfrageperiode in Abhängigkeit von den Schätzwerten der verbrauchten Leistung (PL$_{ji}$) aufweist.

8. Verfahren gemäß Anspruch 7, bei dem der Schritt des Variierens einen Vorgang des schrittweisen Reduzierens der Abfrageperiode in Abhängigkeit von den geschätzten Werten der verbrauchten Leistung (PL$_{ji}$) aufweist.

9. Verfahren gemäß einem der Ansprüche 1 bis 8, das folgende Schritte aufweist:

   - Unterteilen des durch den elektronischen Energiezähler (2) lieferbaren Leistungsbereichs in eine Mehrzahl von Leistungsbändern mittels einer entsprechenden Mehrzahl von Leistungsschwellenwerten;
   - Zuordnen, zu den Leistungsbändern, von jeweiligen Abfrageperiodewerten, die im Verlauf von dem niedrigsten Leistungsband zu dem höchsten Leistungsband abnehmen;
   - Identifizieren des Leistungsbands, in dem die geschätzten Werte der verbrauchten Leistung (PL$_{ji}$) gefunden werden, auf Basis eines Vergleichs zwischen den geschätzten Werten der verbrauchten Leistung und den Leistungsschwellenwerten und

- Einstellen der Abfrageperiode auf den Abfrageperiodewert, der dem identifizierten Leistungsband zugeordnet ist.

10. Verfahren gemäß einem der Ansprüche 1 bis 9, das folgende Schritte aufweist:

- Unterteilen des durch den elektronischen Energiezähler (2) lieferbaren Leistungsbereichs in eine Mehrzahl von Leistungsbändern mittels einer entsprechenden Mehrzahl von Leistungsschwellenwerten;
- Identifizieren des Leistungsbands, in dem die geschätzten Werte der verbrauchten Leistung ($PL_{ji}$) gefunden werden, auf Basis eines Vergleichs zwischen den geschätzten Werten der verbrauchten Leistung und den Leistungsschwellenwerten und
- Zuordnen, zu den jeweiligen Leistungsbändern, von Anfangsabfragezeiten ($tq0_k$), von denen jede aus der Zeit besteht, die ab dann vergehen muss, wenn die geschätzten Werte der verbrauchten Leistung in das zugehörige Leistungsband eingegeben werden, folgend auf eine Zunahme der Leistung, bevor eine erste Abfrage des elektronischen Zählers (2) in einem derartigen Leistungsband durchgeführt wird.

11. Verfahren gemäß einem der vorhergehenden Ansprüche, bei dem der Kommunikationskanal das Haushaltsstromnetz ist und bei dem der elektronische Energiezähler (2) und die Vorrichtung miteinander über das elektrische Netz zwischen denselben mittels Netzleitungskommunikation kommunizieren.

12. Verfahren gemäß einem der vorhergehenden Ansprüche, bei dem der Abtastschritt durch Abtasten der Netzspannung als analoge Eingangsspannung durchgeführt wird, um zweite Spannungswerte als digitale Werte zu erzeugen.

13. Verfahren gemäß einem der vorhergehenden Ansprüche, bei dem die zweiten Spannungswerte durch die Vorrichtung (5) auf eine Weise erhalten werden, die bezüglich des elektronischen Energiezählers (2) autonom ist.

14. Vorrichtung (5), die wirksam mit einem elektronischen Energiezähler verbunden werden kann, um die elektrische Leistung zu schätzen, die durch ein Haushaltstromnetz verbraucht wird, das den elektronischen Energiezähler (2) aufweist, wobei die Vorrichtung (5) elektrische Verbindungselemente (7) zum Verbinden der Vorrichtung mit dem Haushaltsstromnetz (1), eine Kommunikationsschnittstelle (8) zur Kommunikation mit dem elektronischen Energiezähler (2) über einen Kommunikationskanal und eine Verarbeitungs- und Steuereinheit (11) aufweist, die wirksam mit der Kommunikationsschnittstelle (8) verbunden ist, wobei die Vorrichtung (5) dazu konfiguriert und programmiert ist, den elektronischen Energiezähler (2) über den Kommunikationskanal abzufragen, um zu jedem Abfragezeitpunkt Informationen zu empfangen, die zumindest einen Parameter aufweisen, der sich auf eine durch den elektronischen Energiezähler (2) durchgeführte Leistungsverbrauchsmessung bezieht, und **dadurch gekennzeichnet ist, dass**:

- die Vorrichtung (5) eine Spannungsmessschaltung (18) zum Messen der Spannung des Haushaltstromnetzes (1) an dem Verbindungspunkt mit den elektrischen Verbindungselementen (7) und zum Ausgeben einer Mehrzahl von Spannungswerten zwischen zwei aufeinanderfolgenden Abfragen des elektronischen Energiezählers (2) aufweist;
- die Verarbeitungs- und Steuereinheit (11) konfiguriert ist zum Berechnen einer Mehrzahl von geschätzten Werten der verbrauchten Leistung zwischen zwei aufeinanderfolgenden Abfragen mittels einer Funktion, die von den durch die Spannungsmessschaltung (8) bereitgestellten Spannungswerten abhängig ist, und durch den zumindest einen empfangenen Parameter, der sich auf eine durch den elektronischen Energiezähler (2) durchgeführte Leistungsverbrauchsmessung bezieht.

15. Vorrichtung gemäß Anspruch 14, wobei die Vorrichtung derart ist, dass die Netzspannung als analoge Eingangsspannung abgetastet wird, um zweite Spannungswerte als digitale Werte zu erzeugen.

16. Vorrichtung gemäß einem der vorhergehenden Ansprüche, bei der die zweiten Spannungswerte durch die Vorrichtung (5) auf eine Weise erhalten werden, die bezüglich des elektronischen Energiezählers (2) autonom ist.

17. Vorrichtung gemäß Anspruch 14, bei der die Kommunikationsschnittstelle (8) eine Netzleitungskommunikationsschnittstelle ist.

18. Vorrichtung gemäß einem der Ansprüche 14 bis 17, bei der die Verarbeitungs- und Steuereinheit (11) zum Implementieren eines Verfahrens gemäß einem der Ansprüche 1 bis 13 konfiguriert ist.

**Revendications**

1. Procédé d'estimation de l'énergie électrique consommée par un réseau électrique domestique comprenant un compteur d'énergie électronique (2) connecté à un réseau de distribution d'énergie électrique, le procédé comprenant les étapes de :

   - interrogation périodique, selon une période d'interrogation fixe ou variable Tq, du compteur d'énergie électronique (2) sur un canal de communication au moyen d'un dispositif (5) comprenant des éléments de connexion électrique (7) connectés au réseau électrique domestique (1), afin de recevoir, à chaque instant d'interrogation, des informations comprenant au moins un paramètre lié à une mesure de consommation effectuée par le compteur d'énergie électronique (2) ;
   - calcul ou obtention à bord du dispositif (5) de premières valeurs de tension ($Vce_i$) et de premières valeurs de courant correspondantes ($Ice_i$) ;

   le procédé **caractérisé en ce qu'**il comprend les étapes de :

   - échantillonnage, au moyen d'un circuit de mesure de la tension (18) fourni à bord dudit dispositif (5) et connecté auxdits éléments de connexion électrique (7), de la tension du réseau électrique domestique (1) selon une période d'échantillonnage Ts inférieure à ladite période d'interrogation pour obtenir des secondes valeurs de tension ($Vdev_j$, $Vdev_i$) ; et
   - détermination à bord du dispositif (5) d'une pluralité de valeurs estimées de l'énergie consommée ($PL_{ji}$), entre deux instants d'interrogation consécutifs du compteur électronique (2), en fonction desdites premières valeurs de tension ($Vce_i$), desdites premières valeurs de courant ($Ice_i$) et desdites secondes valeurs de tension ($Vdev_j$).

2. Procédé selon la revendication 1, dans lequel l'étape de détermination comprend les étapes de :

   - calcul d'une résistance équivalente (Req), qui est indicatrice de la résistance équivalente lue par le compteur électronique (2) vers le réseau de distribution d'électricité, en fonction d'une série desdites premières valeurs de tension ($Vce_i$) et d'une série correspondante desdites premières valeurs de courant ($Ice_i$) ; et
   - détermination des valeurs estimées de l'énergie consommée ($PL_{ji}$) en fonction desdites premières valeurs de tension ($Vce_i$), desdites premières valeurs de courant ($Ice_i$), de ladite résistance équivalente (Req) et desdites secondes valeurs de tension ($Vdev_j$, $Vdev_i$).

3. Procédé selon la revendication 2, dans lequel ladite résistance équivalente (Req) est calculée comme étant la moyenne arithmétique de la fenêtre glissante d'une résistances instantanées ($Req_i$), chacune étant calculée comme étant le rapport entre une première variation de tension ($\Delta Vcei$) et une première variation de courant correspondante ($\Delta Icei$), ladite première variation de tension ($\Delta Vcei$) étant une différence entre deux premières valeurs de tension acquises/calculées dans deux étapes d'interrogation consécutives et ladite première variation de courant ($\Delta Icei$) étant une différence entre deux valeurs de courant obtenues/calculées pendant les deux mêmes étapes d'interrogation.

4. Procédé selon les revendications 2 ou 3, dans lequel l'étape de détermination comprend les étapes de :

   - détermination des valeurs estimées de l'énergie consommée ($PL_{ji}$) entre deux étapes d'interrogation consécutives (i, i+1) en fonction de l'une desdites premières valeurs de tension ($Vce_i$) et de l'une desdites premières valeurs de courant ($Ice_i$) acquises au moment de la première desdites deux étapes d'interrogation consécutives et en fonction des secondes valeurs de tension ($Vdev_j$) échantillonnées entre les deux étapes d'interrogation consécutives.

5. Procédé selon les revendications 2 ou 3, dans lequel l'étape de détermination comprend les étapes de :

   - pour chaque étape d'échantillonnage (j) entre deux étapes d'interrogation consécutives (i, i+1), calcul d'une seconde variation de tension liée ($\Delta Vdev_{ji}$) entre l'une desdites secondes valeurs de tension ($Vdev_j$), relative à cette étape d'échantillonnage, et une autre desdites secondes valeurs de tension ($Vdev_i$), échantillonnée au moment de la première des deux étapes d'interrogation consécutives ; et
   - pour chaque étape d'échantillonnage (j) entre deux étapes d'interrogation consécutives (i, i+1), calcul d'une valeur estimée liée de l'énergie consommée (PLji) en fonction de l'une desdites premières valeurs de tension (Vcei) et de l'une desdites premières valeurs de courant (Icei) obtenues ou calculées au moment de la première desdites deux étapes d'interrogation consécutives et en fonction desdites secondes valeurs de tension ($\Delta$Vdev$_{ji}$) de ladite résistance équivalente (Req).

**6.** Procédé selon la revendication 5, dans lequel ladite valeur estimée de l'énergie consommée est calculée selon la formule :

$$PL_{ji} = (Vce_i + \Delta Vdev_{ji}) \cdot (Ice_i + \Delta Idev_{ji}),$$

où PL$_{ji}$ est la valeur estimée de l'énergie consommée au moment de l'étape d'échantillonnage générique j, Vce$_i$ est ladite une desdites premières valeurs de tension obtenues/calculées au moment de la première desdites deux étapes d'interrogation consécutives, $\Delta$Vdev$_{ji}$ est ladite seconde variation de tension, Ice$_i$ est ladite une desdites premières valeurs de courant obtenues/calculées au moment de la première desdites deux étapes d'interrogation consécutives et $\Delta$Idev$_{ji}$ est une seconde variation de courant calculée comme étant le rapport entre ladite seconde variation de tension et ladite résistance équivalente.

**7.** Procédé selon l'une quelconque des revendications 1 à 6, comprenant une étape de variation de la période d'interrogation en fonction desdites valeurs d'estimation de l'énergie consommée (PL$_{ji}$).

**8.** Procédé selon la revendication 7, dans lequel ladite étape de variation comprend une opération de réduction progressive de ladite période d'interrogation en fonction desdites valeurs estimées de l'énergie consommée (PL$_{ji}$).

**9.** Procédé selon l'une quelconque des revendications 1 à 8, comprenant les étapes de :

- subdivision de la gamme d'énergie pouvant être fournie par le compteur d'énergie électronique (2) en une pluralité de bandes d'énergie au moyen d'une pluralité correspondante de valeurs seuils d'énergie ;
- association aux bandes d'énergie de valeurs de périodes d'interrogation respectives, qui diminuent en passant de la bande d'énergie la plus basse à la bande d'énergie la plus haute ;
- identification de la bande d'énergie dans laquelle lesdites valeurs estimées de l'énergie consommée (PL$_{ji}$) sont trouvées sur la base d'une comparaison entre lesdites valeurs estimées de l'énergie consommée et lesdites valeurs seuils d'énergie ; et
- ajustement de la période d'interrogation à la valeur de la période d'interrogation associée à la bande d'énergie identifiée.

**10.** Procédé selon l'une quelconque des revendications 1 à 9, et comprenant :

- la subdivision de la gamme d'énergie pouvant être fournie par ledit compteur d'énergie électronique (2) en une pluralité de bandes d'énergie au moyen d'une pluralité correspondante de valeurs seuils d'énergie ;
- l'identification de la bande d'énergie dans laquelle lesdites valeurs estimées de l'énergie consommée (PL$_{ji}$) sont trouvées sur la base d'une comparaison entre lesdites valeurs estimées de l'énergie consommée et lesdites valeurs seuils d'énergie ; et
- l'association aux temps d'interrogation initiaux des bandes d'énergie respectives (tq0$_k$), chacun constitué du temps qui doit s'écouler à partir du moment où les valeurs estimées de l'énergie consommée sont entrées dans la bande d'énergie liée suite à une augmentation de l'énergie avant la réalisation d'une première interrogation dudit compteur électronique (2) dans une telle bande d'énergie.

**11.** Procédé selon l'une quelconque des revendications précédentes, dans lequel ledit canal de communication est ledit réseau électrique domestique et dans lequel ledit compteur d'énergie électronique (2) et ledit dispositif communiquent l'un avec l'autre entre eux sur ledit réseau électrique au moyen de courants porteurs en ligne.

**12.** Procédé selon l'une quelconque des revendications précédentes, dans lequel ladite étape d'échantillonnage est effectuée par échantillonnage de ladite tension de réseau en tant que tension d'entrée analogique pour produire lesdites secondes valeurs de tension en tant que valeurs numériques.

**13.** Procédé selon l'une quelconque des revendications précédentes, dans lequel lesdites secondes valeurs de tension sont obtenues par le dispositif (5) d'une manière autonome par rapport au compteur d'énergie électronique (2).

**14.** Dispositif (5) pouvant être connecté de manière opérationnelle à un compteur d'énergie électronique pour estimer l'énergie électrique consommée par un réseau électrique domestique comprenant ledit compteur d'énergie électronique (2), le dispositif (5) comprenant des éléments de connexion électrique (7) pour connecter le dispositif au réseau électrique domestique (1), une interface de communication (8) pour la communication avec le compteur d'énergie électronique (2) sur un canal de communication et une unité de traitement et de contrôle (11) connectée de manière opérationnelle à l'interface de communication (8), le dispositif (5) étant configuré et programmé pour interroger le compteur d'énergie électronique (2) sur ledit canal de communication afin de recevoir à chaque instant d'interrogation des informations comprenant au moins un paramètre lié à une mesure de consommation d'énergie effectuée par le compteur d'énergie électronique (2) et étant **caractérisé en ce que** :

- le dispositif (5) comprend un circuit de mesure de la tension (18) pour mesurer la tension du réseau électrique domestique (1) au point de connexion avec lesdits éléments de connexion électrique (7) et délivrer en sortie une pluralité de valeurs de tension entre deux interrogations successives du compteur d'énergie électronique (2) ;
- l'unité de traitement et de contrôle (11) est configurée pour calculer une pluralité de valeurs estimées de l'énergie consommée entre deux interrogations successives au moyen d'une fonction qui dépend desdites valeurs de tension fournies par le circuit de mesure de la tension (8) et par ledit au moins un paramètre reçu lié à une mesure de consommation effectuée par le compteur d'énergie électronique (2).

**15.** Dispositif selon la revendication 14, ledit dispositif est tel qu'il permet d'échantillonner la tension de réseau en tant que tension d'entrée analogique pour produire lesdites secondes valeurs de tension en tant que valeurs numériques.

**16.** Dispositif selon l'une quelconque des revendications précédentes, dans lequel lesdites secondes valeurs de tension sont obtenues par le dispositif (5) d'une manière autonome par rapport au compteur d'énergie électronique (2).

**17.** Dispositif selon la revendication 14, dans lequel ladite interface de communication (8) est une interface de courants porteurs en ligne.

**18.** Dispositif selon l'une quelconque des revendications 14 à 17, dans lequel l'unité de traitement et de contrôle (11) est configurée pour exécuter un procédé selon l'une quelconque des revendications 1 à 13.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004095327 A